# EUROPEAN PATENT SPECIFICATION

(11) **EP 3 774 238 B1**
(45) Date of publication and mention of the grant of the patent: **18.05.2022**
(21) Application number: 19711913.4
(22) Date of filing: 21.03.2019
(51) Int. Cl.: B26D 5/00, B26F 1/38, B26D 7/01, D06H 7/24, G06Q 10/04, G06T 7/00, G06T 7/73, B26D 7/22, G06K 9/32

(54) **CUTTING VERIFICATION METHOD FOR AT LEAST ONE FABRIC SHEET, IN PARTICULAR A MATTRESS OF FABRICS AND RELATED CUTTING SYSTEM**
VERFAHREN ZUM PRÜFEN VON SCHNEIDEN FÜR MINDESTENS EIN GEWEBE, INSBESONDERE EINE MATRATZE AUS GEWEBEN UND ENTSPRECHENDES SCHNEIDSYSTEM
PROCÉDÉ DE VÉRIFICATION DE COUPE POUR AU MOINS UNE FEUILLE DE TISSU, EN PARTICULIER UN MATELAS DE TISSUS, ET SYSTÈME DE COUPE ASSOCIÉ

(30) Priority: 29.03.2018 IT 201800004107
(43) Date of publication of application: 17.02.2021
(73) Proprietor: OROX GROUP S.r.l., 20122 Milano (IT)
(72) Inventor: MAIANDI, Marta, 24035 Paladina (BG) (IT); MILIC, Zivota, 24060 Bagnatica (BG) (IT)
(74) Representative: Ferrari, Barbara
(86) International application number: PCT/EP2019/057060
(87) International publication number: WO 2019/185440

(56) References cited:
- EP-A1- 2 762 432
- WO-A1-2017/144060
- DE-A1-102008 049 791
- JP-A- 2014 058 752
- US-A1- 2013 176 422
- US-B2- 9 525 797
- Anonymous: "collimare in Vocabolario - Treccani", , 21 November 2018 (2018-11-21), XP055525753, Retrieved from the Internet: URL:http://www.treccani.it/vocabolario/col limare/ [retrieved on 2018-11-21]
- Anonymous: "collimate, v. : Oxford English Dictionary", , 21 November 2018 (2018-11-21), XP055525757, Retrieved from the Internet: URL:http://www.oed.com/view/Entry/36355#ei d8900611 [retrieved on 2018-11-21]

## Description

### Field of application

In its more general aspect the present invention relates to a method adapted to verify the correct cutting of a fabric, in particular a mattress of fabrics, mainly in the preparation step of a cutting system, for applications in the field of clothing and technical fabrics or for particular applications such as for instance fabrics for filters, upholstery, car interiors, airbags, furnishing accessories, etc.

The present invention also relates to a system for verifying the correct arrangement of a fabric to be cut by a cutting system.

The present invention substantially relates to the field of automatic fabric cutting machines, widely adopted in the textile industry for the mass-production of clothing or other components from fabrics, in particular pluralities of fabric sheets, stacked and simultaneously cut by said machine.

### Prior art

As it is well known in this specific technical field, over the years there has been an increasing development of automatic systems for cutting fabrics, in particular in the form of pluralities of fabric sheets stacked and simultaneously cut, indicated as mattresses of fabrics. An object of said automatic systems is to increase the quality of the cutting itself, with minimization of waste, and at the same time with minimization of the cutting times, in order to maximize the quantity produced in a daily cycle.

In the series production, from a "piece" (usually in the form of a roll) of a selected fabric, more fabric sheets are obtained, usually superimposed to each other to form the so-called "mattress"; afterwards, the mattress is cut in all its thickness along predefined cutting traces and corresponding to the parts to be sent to assembly, for instance to specific portions of a garment to be made through this fabric.

An apparatus comprising a flatbed cutting machine with a work plane for receiving the printed sheets and including an operating group (5) mobile along the work plane provided with a cutting member for cutting the sheets, as well as a first camera above the work plane for imaging the upper surface and a computer system functionally connected to the first camera and configured for receiving digital images from the first camera is known from the PCT publication No. WO 2017/144060 in the name of ZÜND SKANDINAVIEN APS.

There are several ways to define the cutting traces. In particular, according to more traditional ways and used for some time in the field, the cutting traces are defined by applying so-called "models" or "templates", for instance made of paper, of the parts to be cut onto the first sheet of the mattress (the one which is higher up compared to a cutting tool and thus to an operator); or, according to more advanced and more recent solutions, the cutting traces are obtained from a computer-generated cutting model, where in this case the movement of the cutting tool (for example an alternative or circular saw or even a laser in the most modern systems) on the mattress is managed automatically precisely based on the cutting model and the cutting traces therein contained.

Although the cutting machines currently used in the field guarantee obvious advantages in terms of automation of the production process, they still entail the need for human intervention by an operator in the proximity of the actual cutting system, in particular comprising the cutting tool, which slows down the process compared to an optimal condition and introduces the need to guarantee adequate protection to the operator.

In particular, prior to the actual cutting operation of the mattress of fabrics or generically of the fabric, which, as said, is now practically performed automatically by the known cutting systems, a verification step in the proximity of the machine by the operator is still necessary. In fact, once the fabric has been conveyed onto a cutting plane of the cutting system, it is necessary for an operator to be present to verify the correct alignment of the fabric with the cutting plane, indicating a starting zero point and moving a so-called cutting head, which comprises the cutting tool, in one or two predetermined points to verify that the fabric is in place.

Based on these points detected on the fabric, a software associated with the cutting system is capable of calculating a possible rotary translation needed to straighten the fabric itself, should it be crooked with respect to edges of the cutting plane.

It is pointed out that said operation allows optimizing the cutting performed by the cutting system, a rotated or displaced arrangement of the fabric inevitably entailing an increase in the waste material at best, and, in the worst case, a totally wrong cut with the loss of all the cut fabric. In particular, since the cutting involves, in most cases, not a single fabric sheet but a mattress of fabric sheets, the loss of material may be considerable in case of incorrect arrangement on the cutting plane.

Obviously, this kind of error also translates into a loss in terms of time, since the wrong cutting operation must be repeated, and in economic terms given the cost of the material.

Furthermore, the presence of the operator in the proximity of the machine to carry out the verification, an operator who in most cases is the same who must then move to a control station to load the desired model and start the actual cutting, introduces a further loss in terms of time, in particular time-operator, in addition to that for the "idle" movement of the cutting head to perform the verifications of the points on the fabric.

It is pointed out that said loss in terms of time-operator, which is limited if a single cutting operation is considered, actually must be wholly considered in a serial cutting process and given the temporal order of production with automated systems, it may lead to a non-negligible amount of time at the end of a daily production cycle, which translates into a loss in economic terms.

Furthermore, it may be useful, in order to ensure a correct cut of the fabric, in case the "templates" are used, that the cutting head is also "idle" moved to trace a contour of the shapes that will be subsequently cut, so as to preliminarily verify to have loaded the correct model.

This operation ensures a greater safety of said cut, thus avoiding, in this case as well, material losses due to undesired cuts, and the consequent economic losses.

However, in this case as well, this further "tracing" operation entails a loss in terms of time which - even if minimal - must always be evaluated from a point of view of the overall loss at the end of the cycle and of the consequent loss in economic terms.

To sum up, the problems which nowadays affect the known cutting systems are mainly linked to the alignment verification times of the fabric with respect to the cutting plane and to the verification times of the correct loaded model through a cutting simulation. In case these times are not considered, i.e. in case the cutting is made without a prior verification, the margin of error and the consequent probability of joint losses both at time and economic levels would be considerably increased.

The technical problem of the present invention is thus to conceive a method for verifying the correct cutting of a fabric, in particular a mattress of fabrics, to be performed much more rapidly, in order to overcome the limits of the solutions currently proposed by the prior art.

A further object is to allow the detection of the model which the fabric is intended to through a specific identifier, once the correct arrangement of the fabric sheet on the cutting plane has been verified.

Another object is to provide a completely automatic operation wherein it is no longer necessary for an operator to be present on site but wherein a remote control of all of the steps performed by the cutting system is enough.

A further object is to provide a device which allows a cutting verification that allows performing the aforementioned verifications.

Finally, an object of the invention is to provide a device which may also be implemented in pre-existing systems through proper changes, without the need of complete replacements.

### Summary

The idea underlying the present invention is to detect through an automatic process the current position of the fabric sheet once it has been arranged, matching it with respect to an ideal position.

Based on this solution idea the technical problem is solved by a cutting verification method of at least one fabric sheet arranged on a cutting plane comprising the following steps: detecting a snap-shot of the fabric sheet arranged on the cutting plane by means of an image capture device; loading the snap-shot on a control system; alignment verification of at least one point of interest of the fabric sheet with a corresponding point of interest of the cutting plane by means of the control system.

The image capture device may be in the form of a camera, a video camera, a webcam, or another device suitable for the intended purpose.

Preferably, in accordance with the principle of speeding up the industrial production process, the above method is applied on a mattress of fabric sheets.

According to a preferred aspect the at least one point of interest of the fabric sheet useful to verify the alignment is a point of a perimeter of the at least one fabric sheet and the corresponding point of interest of the cutting plane is a corresponding point of a perimeter of the cutting plane.

Still more preferably, the at least one point of interest of the at least one fabric sheet is an edge of the at least one fabric sheet and the corresponding point of interest of the cutting plane is a corresponding edge of the cutting plane. Nothing forbids considering a different point of interest, all the choices being anyway included in the scope defined by the appended claims.

In order to determine the alignment, the points of interest may be visually identified by adopting adhesive strips positioned on the fabric sheet or through signs made with ink markers, or through other solutions, all included in the scope of the appended claims.

In case templates are used, for instance paper templates, as a marker of the cutting to be made, the points of interest may be marked on said templates. Moreover, in this case, the method may provide the arrangement of the template on said at least one fabric sheet, the template comprising at least one identification element; the detection of the identification element of the snap-shot by means of the image capture device; the loading of a reference model from a preset database in the control system; the match of the reference model with the snap-shot. Alternatively, it is possible to use specific labels provided with the identification element affixed to the at least one fabric sheet.

Furthermore, this solutions allows verifying that the reference model loaded on the control system actually coincides with the specific model to be cut on the fabric, thus avoiding cutting wrong models. Since the match is almost instantaneous, the verification time is minimized and vice versa the guarantee of a correct cutting is maximized.

Furthermore, according to an aspect of the invention, the method provides the activation of the cutting step by the operator in case of exact alignment among points of interest and exact correspondence between what has been detected by the snap-shot and the reference model. Vice versa, in case of not exact alignment of points of interest and of not exact correspondence between what has been detected by the snap-shot and the reference model, an error signal is generated. "Exact correspondence" means the exact overlap detected by the operator on a video support of the contours of the detected image on the snap-shot with the contours of the digital one of the reference model.

The error signal sent may be a visual signal, a light signal, a sound signal or a combination thereof. The error may also be determined by a dimensional non-correspondence between the at least one fabric sheet and the cutting plane. It is possible to provide a specific error signal for each type of error found.

In a still more preferred aspect, and in line with the complete automation of the cutting system with a simple remote control by an operator, the detected image on the snap-shot is vectorized by a specific program, which allows an automatic verification of correct alignment and of overlap of the contours of the detected image on the snap-shot with the contours of the digital one of the reference model. If the verification is successful, the start can occur automatically, as well as if there is not a perfect correspondence, the program may send the error signal, as well as identify the type of detected error and, if possible, correct it.

Furthermore, according to another aspect of the invention, the above method provides a cutting quality evaluation by means of the control system. Said control system is connected to a sensor system. The sensors may be arranged at the support beam, the cutting element or the cutting plane, or in a plurality of said positions.

Advantageously, according to said aspect, the sensors detect, for instance, the sharpness of the blade, the condition of the fabric, etc., these data are sent to the control system which, crossing them with the data detectable by the snap-shot, evaluates the cutting quality according to a preset scale of values. In a more preferred aspect, said evaluation is followed by a step of taking and classifying the cut products.

The above method may be put in place by a cutting system for fabrics comprising a cutting plane, a support beam, which is movable along a longitudinal dimension of the cutting plane, at least one cutting element, coupled to the support beam and movable on the support beam, along a transversal dimension of the cutting plane, an image capture device, a control system, connected to the image capture device.

In case paper templates are used as cutting marker, the cutting system comprises templates comprising at least one identification element. Alternatively, specific labels may be used comprising the identification element. Said identification element may be represented for instance by a bar code, a QR code or different codified symbols or signs.

Furthermore, according to a preferred aspect, the system comprises a system of actuators connected to the control system, to actuate the cutting element on the at least one un fabric sheet arranged on the cutting plane. According to the present aspect of the invention through the control system, once the arrangement of the fabric sheet, or of the mattress of the fabric sheets, has been verified with respect to the cutting plane, it is possible to modify said position in order to correct it by means of said actuators, without the need of a manual intervention by the operator.

According to another aspect of the invention, the cutting system comprises a system of sensors. The sensors may be arranged at the support beam, the cutting element or the cutting plane, or in a plurality of said positions.

Thanks to said system of sensors the cutting system, and in particular the control system, may acquire a series of data concerning the condition of the fabric and of the cutting to evaluate the quality of the cutting made. Based on the evaluation performed, in a preferred aspect, the cutting system actuates an element for taking cut fabrics, which are arranged based on a quality classification performed at the end of the evaluation of the control system.

Still preferably, the cutting system comprises a spreading conveyor to arrange the at least one fabric sheet on the cutting plane. This aspect relates, in particular, to a case in which there is a cutting plane of more limited dimensions, whereon the fabric to be cut is made to slide.

In another aspect it is also possible to have a plurality of cutting planes among which the support beam and the at least one cutting element are moveable, each cutting plane providing a dedicated image capture device. Advantageously, the present aspect allows adopting a same cutting system for more cutting planes, with a movement through known motorized means of the cutting elements.

Nothing forbids adopting different solutions from those presented, for instance with a unique very long cutting plane without a spreading conveyor, or with a plurality of cutting systems, or with a unique image capture device which moves integrally with the cutting systems. All these alternative aspects are actually included in the scope of protection defined by the appended claims.

Further features and advantages of the cutting verification method and of the cutting system according to the present invention will become apparent from the following description of a preferred embodiment given by way of non-limiting example with reference to the appended figures.

### Brief description of the figures

- Figure 1 shows an overall view of the cutting system according to the present invention.
- Figure 2 shows an example of correct match on the control system of the cutting system of figure 1;
- Figure 3 shows an example of wrong match on the control system of the cutting system of figure 1.

In the different figures, analogous elements will be identified by analogous reference numbers.

### Detailed description

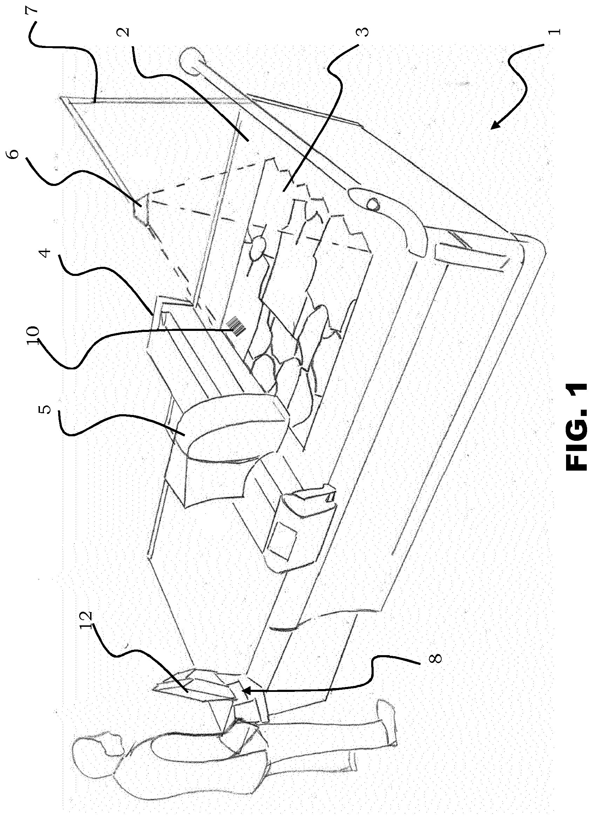

With reference to the enclosed figure 1, reference number 1 globally and schematically indicate a cutting system made according to the present invention.

In the present embodiment the cutting system 1 comprises a cutting plane 2 whereon the fabric sheet, or the mattress of fabric sheets 3, to be cut will be conveyed. The cutting system 1 further comprises a support beam 4 whereon at least one cutting head or generically a cutting element 5 is provided.

The support beam 3 is movable along the longitudinal dimension of the cutting plane 2 through proper motorized means (not shown).

The cutting element 5 is moveable along the transversal dimension of the cutting plane 2 and is moveable close to or away from the fabric sheet 3. The cutting element 5 is moved by suitable motorized means (not shown).

Through the movement of the support beam 4 and of the cutting element 5 the entire cutting plane 2 is covered.

The cutting plane 2 is surmounted by an image capture device 6 at a predetermined distance to be able to frame the entire fabric sheet 3.

The image capture device 6 may be in the form of a camera, of a video camera, a webcam, or another device suitable for the intended purpose.

The image capture device 6 produces a snap-shot 11 of the at least one fabric sheet 3 on the cutting plane 2.

The image capture device 6 in the present embodiment is connected to the cutting plane 2 through a fixed rod 7.

Alternatively, it is possible to adopt an articulated rod 7, which is adjustable to have the correct framing.

Still alternatively, it is possible to connect the image capture device 6 to a different fixed or movable element.

The various support elements of the image capture device 6 are anyway included within the scope of protection defined by the appended claims.

The cutting system 1 further comprises a control system 8, connected to the image capture device 6. The connection between the control system 8 and the image capture device 6 may be of the wired or Wi-Fi type.

In the present embodiment the control system 8 allows verifying the correct arrangement of the fabric sheet 3 with respect to the cutting plane 2 on the snap-shot 11 produced by the image capture device 6. Furthermore, the control device 8 allows verifying the loading of a correct reference model 9 with respect to the model actually to be cut which is identified, if present, by an identification element 10. The identification element 10 may be present on a paper template used as cutting marker or on a dedicated label placed on a fabric sheet 3. The identification element 10 may be in the form of a QR code, a bar code, a codified symbol or a codified sign, or a combination thereof.

Furthermore, the cutting system 1 comprises a system of actuators (not shown) connected to the control system 8. The system of actuators is actuated by the control system 8 to perform, for instance, arrangement corrections of the fabric sheet 3 with respect to the cutting plane 2. The system of actuators may be either hydraulic, or electric, etc.

Furthermore, the cutting system 1 comprises a system of sensors (not shown) at one or more of the cutting plane 2, the support beam 4 and the cutting element 5. The system of sensors is further connected to the control system 8. The system of sensors is adapted to verify the conditions of the fabric sheet 3 and of the cutting system (in particular, but not only, of the cutting blade) to perform an evaluation of the cut fabric. The system of sensors may comprise orientation sensors, proximity sensors, optical sensors, etc.

Still furthermore, the cutting system 1 provides a taking up system (not shown) which is adapted to take the cut fabric and to classify it based on the evaluation jointly performed by the system of sensors and the control system 8.

The fabric, or the mattress of fabrics 3, in an embodiment of the invention, is conveyed on the cutting plane 2 by means of a spreading conveyor (not shown) to obtain a continuous flow of sheets or fabric mattresses to be cut.

However, in an alternative embodiment a cutting plane 2 of larger dimensions may be provided for laying a unique fabric sheet 3 or fabric mattress from which to obtain just a predetermined number of components. On said unique cutting plane 2 an assembly or a plurality of assemblies may be provided, which comprise support beam 4, cutting element 5 and image capture device 6.

In an alternative embodiment a plurality of cutting planes 2 is provided, among which the support beam 4 and the cutting element 5 are moveable, each cutting plane 2 providing a dedicated image capture device 6. A unique image capture device 6 which is integral with the support beam 4 and the cutting element 5 may also be provided.

A realization of a method according to the present invention is hereinafter described considering, for illustrative purposes, the above described embodiment of the cutting system 1.

The at least one fabric sheet 3 is arranged on the cutting plane 2. The arrangement may occur manually or, like in the present embodiment, through a spreading conveyor.

The image capture device 6 detects a snap-shot 11 of the arrangement of the fabric sheet 3 on the cutting plane 2.

The image capture device 6 sends the snap-shot 11 to the control device 8.

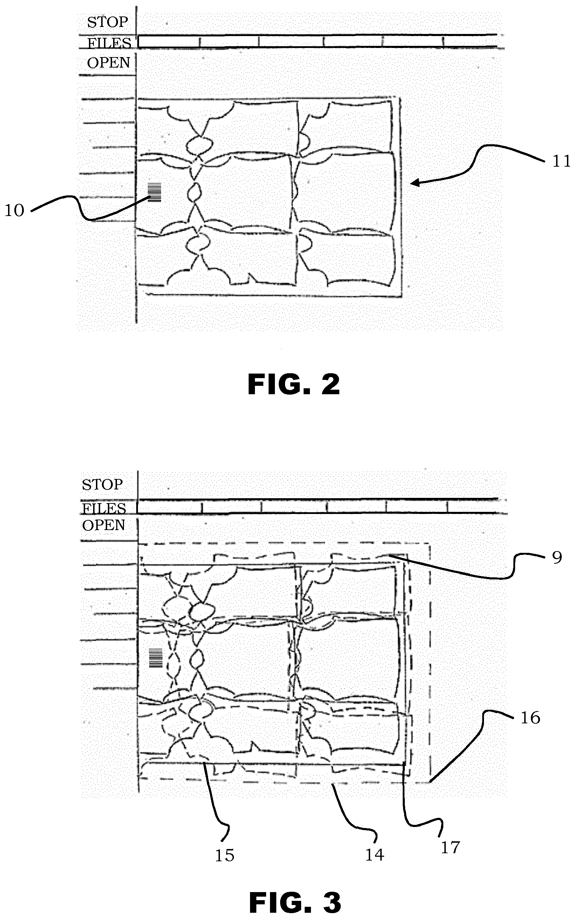

An operator views on a video interface 12 of the control system 8, as visible in figures 2 and 3, in particular, the alignment of at least one, preferably two, still more preferably three points of interest on the fabric sheet 3 with corresponding points of interest on the cutting plane 2. In particular, in figure 2 a case of correct alignment between points of interest is shown, whereas in figure 3 a case of incorrect alignment between points of interest is shown. In case the control system detects an incorrect alignment, it generates an error signal for the operator, who can then proceed moving or realigning the fabric sheet 3 with respect to the cutting plane 2, based on the indications given by the control system 8. A dimensional non-correspondence between the fabric sheet 3 and the cutting plane 2 may also be detected by the control system 8, emitting a consequent error signal. The error signal emitted by the control system 8 may be in the form of a visual signal, a light signal, a sound signal or a combination of the three, also being possible to set a specific error signal for a specific error.

In an embodiment the at least one point of interest on the fabric sheet 3 and the corresponding at least one point of interest on the cutting plane 2 are located at a perimeter 14 of said at least fabric sheet 3 and at a perimeter 15 of the cutting plane 2, respectively.

Preferably, the at least one point of interest on the fabric sheet 3 and the corresponding at least one point of interest on the cutting plane 2 are located at an edge 16 of the fabric sheet 3 and at an edge 17 of the cutting plane 2, respectively.

The at least one point of interest on the fabric sheet 3 and the corresponding at least one point of interest on the cutting plane 2 to determine the alignment may be visually identified by adopting adhesive strips (not shown) arranged on the fabric sheet 2 or by means of signs made on the fabric sheet 2 with ink markers, or, if used, with markers on the templates, or through other solutions, all included in the scope of the appended claims.

In case of correct alignment, the cutting procedure may be allowed, otherwise the operator may actuate the system of actuators connected to the control device 8 to correctly re-arrange the fabric sheet 3.

Furthermore, in an embodiment the control system 8 performs a vectorization of the snap-shot 11 detected by the image capture system 6. In this way the entire operation of alignment verification and of actuation of the subsequent cutting step or of the re-arrangement step by the actuators may be performed entirely automatically by the control system 8. In this case the operator may verify malfunctions even remotely.

In an embodiment, according to the above said, paper templates are present as cutting markers, which are further provided with identification elements 10 in the form of QR code, bar code, codified symbol, codified sign or a combination thereof. Alternatively, dedicated labels arranged on the fabric sheet 3 and provided with said identification element 10 may be provided.

In this embodiment the snap-shot 11 also detects the identification element 10 and transfers it to the control system 8. The control system 8 thus loads the reference model 9 related to the identification element detected on the snap-shot 11. The operator verifies that the loaded reference model 9 actually coincides with the paper template, if present, prior to allow starting the cutting step. Thus, the operator also verifies that there is an overlapping between the reference model 9 and the template.

The operator's action may be replaced, in case the vectorization of the snap-shot 11 is performed, by an automatic verification of the control system 8, by directly starting the cutting step once the reference model 9 has been loaded and once the alignment of the at least one fabric sheet 3 with respect to the cutting plane 2 and the overlapping of the contours of reference model 9 and template has been verified.

In the presence of a system of sensors at the cutting plane 2, of the support beam 4 or of the cutting element 5 or of a system for taking the cut fabric or on a plurality thereof, connected to the control system 8, the method provides the classification of said cut fabric based on the quality evaluated based on a preset scale of values, crossing the data of the system of sensors with the data obtained from the snap-shot 11 on the control system 8.

The present invention solves the technical problem and achieves several advantages, the first of which is surely given by the fact that the method and system described minimize the errors, meanwhile maximizing the obtainable performances.

In particular, the operator only verifies the presence of errors visualized by the control system 8, since he does not need to look in person alignments or overlapping, a step which is generally subjected to possible human errors. Furthermore, the stillness of the operator at the control system 8 allows no loss of time in the production cycle, which translates into a profit from an economic point of view. The loss of time as well, and the consequent economic losses linked to the "idle" shift of the cutting element are in this case avoided.

Furthermore, advantageously, though nowadays there exist multiple security systems to avoid operator injuries, the non-presence of the operator himself in proximity of the machine, maximizes in any case safety by avoiding possible operator injuries.

A further advantage is also represented by the fact that the method and system according to the present invention provide the possibility of an entirely automatic functionality, by eliminating the need of the operator's presence on site, since it is possible to delegate to the personnel high level functions, i.e. of supervision on a plurality of systems in series, thus obtaining a maximization of the productive system.

Still an advantage is to have a system which can be implemented on pre-existing systems, since there is no need to replace the complete system, but only to require the implementation of the specific components needed.

A further advantage is given by the fact that the system itself may be applied to all kinds of cutting systems, either static with a unique cutting very large plane, or cutting systems with a spreading conveyor, or multi-plane cutting systems. The invention is not indeed affected by the typology of cutting system, since it only needs known moving systems.

Finally, an advantage of the method and system according to the invention is given by the simplicity and practicality of application.

It will be clear to the skilled person that changes and variants may be made to the system of the present invention, all falling within the scope of the invention defined by the appended claims.

## Claims

1. Cutting verification method for at least one fabric sheet (3) arranged on a cutting plane (2), in a cutting system (1) comprising a support beam (4), movable along a longitudinal dimension of said cutting plane (2), and at least one cutting element (5), coupled to said support beam (4) and movable on said support beam (4), along a transversal dimension of said cutting plane (2), comprising the following steps:
• detecting a snap-shot (11) of said at least one fabric sheet (3) arranged on said cutting plane (2) by means of an image capture device (6);
• loading said snap-shot (11) on a control system (8);
• **characterised by** verifying the alignment of at least one point of interest of said at least one fabric sheet (3) with a corresponding point of interest of said cutting plane (2) by means of said control system (8).

2. Method according to claim 1, further comprising the following steps:
• arranging a template onto said at least one fabric sheet (3), said template comprising at least one identification element (10);
• detecting said identification element (10) of said snap-shot (11) by means of said image capture device (6);
• loading a reference model (9) referred to said identification element (10) from a database preset in said control system (8);
• matching said reference model (9) with said snap-shot (11).

3. Method according to claim 2, wherein, in case of exact alignment of the at least one point of interest of said at least one fabric sheet (3) with the corresponding point of interest of said cutting plane (2) and in case of exact correspondence between said snap-shot (11) and said reference model (9) a cutting step is activated, in case of not exact alignment of the at least one point of interest of said at least one fabric sheet (3) with the corresponding point of interest of said cutting plane (2) and in case of not correspondence between said reference model (9) and said snap-shot (11) an error signal is generated, said error signal being preferably represented by a visual signal and/or a light signal and/or a sound signal.

4. Method according to any one of the previous claims, wherein said at least one point of interest of said at least one fabric sheet (3) is a point of a perimeter (14) of said at least one fabric sheet (3) and said corresponding point of interest of said cutting plane (2) is a corresponding point of a perimeter (15) of said cutting plane (2).

5. Method according to any one of the previous claims, wherein said at least one point of interest of said at least one fabric sheet (3) is an edge (16) of said at least one fabric sheet (3) and said corresponding point of interest of said cutting plane (2) is a corresponding edge (17) of said cutting plane (2).

6. Method according to any one of the previous claims, wherein said snap-shot (11) is vectorized by said control system (8).

7. Method according to any of the previous claims, further comprising:
• a cutting quality evaluation by means of said control system (8) further connected to a sensor system at said support beam (4) and/or at said cutting element (5) and/or at said cutting plane (2); and/or
• taking cut fabric from said cutting plane (2) and classification of said cut fabric based on said cutting quality evaluation.

8. Cutting system (1) for fabrics comprising:
• a cutting plane (2);
• a support beam (4), movable along a longitudinal dimension of said cutting plane (2);
• at least one cutting element (5), coupled to said support beam (4) and movable on said support beam (4), along a transversal dimension of said cutting plane (2);
• an image capture device (6);
**characterized by** further comprising:
• a control system (8), connected to said image capture device (6), for the alignment verification of the at least one point of interest of at least one fabric sheet (3) with a corresponding point of interest of said cutting plane (2).

9. Cutting system (1) according to claim 8, wherein said at least one point of interest of said at least one fabric sheet (3) is chosen between:
• a point of a perimeter (14) of said at least one fabric sheet (3) and said corresponding point of interest of said at least one cutting plane (2) is a corresponding point of a perimeter (15) of said cutting plane (2); or
• an edge (16) of said at least one fabric sheet (3) and said corresponding point of interest of said cutting plane (2) is a corresponding edge (17) of said cutting plane (2).

10. Cutting system (1) according to claim 8, further comprising a template to be arranged onto the at least one fabric sheet (3) to be cut with said cutting system (1), said template comprising at least one identification element (10), said identification element (10) preferably comprising a bar code and/or a QR code and/or a codified symbol and/or a codified sign.

11. Cutting system (1) according to claim 8, further comprising:
• a spreading conveyor for arranging the at least one fabric sheet (3) onto said cutting plane (2).

12. Cutting system (1) according to any one of claims 8 to 11, further comprising a system of actuators connected to said control system (8), to actuate said cutting element (5) on the at least one fabric sheet (3) arranged on said cutting plane (2).

13. Cutting system (1) according to any one of claims 8 to 12, further comprising a system of sensors arranged at said support beam (4) and/or at said cutting element (5) and/or at said cutting plane (2).

14. Cutting system (1) according to any one of claims 8 to 13, further comprising an element for taking fabrics cut by means of said cutting system (1).

15. Cutting system (1) according to claim 8, comprising a plurality of cutting planes (2) between which said support beam (4) and said at least one cutting element (5) are movable, each cutting plane (2) providing a dedicated image capture device (6).

## Patentansprüche

1. Verfahren zum Überprüfen des Schnitts für wenigstens eine auf einer Schneidebene (2) angeordnete Gewebebahn (3) in einem Schneidsystem (1), das einen Stützbalken (4), der entlang einer Längsausdehnung der Schneidebene (2) beweglich ist, und wenigstens ein Schneidelement (5), das mit dem Stützbalken (4) gekoppelt ist und an dem Stützbalken (4) entlang einer Querausdehnung der Schneidebene (2) beweglich ist, aufweist, umfassend die folgenden Schritte:
• Erfassen einer Momentaufnahme (11) der wenigstens einen Gewebebahn (3), die auf der Schneidebene (2) angeordnet ist, durch eine Bildaufnahmevorrichtung (6);
• Laden der Momentaufnahme (11) in ein Steuersystem (8) ;
**gekennzeichnet durch**
• Überprüfen der Ausrichtung wenigstens eines Punkts von Interesse der wenigstens einen Gewebebahn (3) mit einem entsprechenden Punkt von Interesse der Schneidebene (2) durch das Steuersystem (8).

2. Verfahren nach Anspruch 1, ferner umfassend die folgenden Schritte:
• Anordnen einer Schablone auf der wenigstens einen Gewebebahn (3), wobei die Schablone wenigstens ein Identifikationselement (10) aufweist;
• Erfassen des Identifikationselements (10) der Momentaufnahme (11) durch die Bildaufnahmevorrichtung (6);
• Laden eines auf das Identifikationselement (10) bezogenen Referenzmodells (9) aus einer Datenbank, die in dem Steuersystem (8) vorgegeben ist;
• Vergleichen des Referenzmodells (9) mit der Momentaufnahme (11).

3. Verfahren nach Anspruch 2, wobei im Fall einer exakten Ausrichtung des wenigstens einen Punkts von Interesse der wenigstens einen Gewebebahn (3) mit dem entsprechenden Punkt von Interesse der Schneidebene (2) und im Fall einer exakten Übereinstimmung zwischen der Momentaufnahme (11) und dem Referenzmodell (9) ein Schneideschritt aktiviert wird, im Fall einer nicht exakten Ausrichtung des wenigstens einen Punkts von Interesse der wenigstens einen Gewebebahn (3) mit dem entsprechenden Punkt von Interesse der Schneidebene (2) und im Fall einer Nichtübereinstimmung zwischen dem Referenzmodell (9) und der Momentaufnahme (11) ein Fehlersignal erzeugt wird, wobei das Fehlersignal vorzugsweise durch ein optisches Signal und/oder ein Leuchtsignal und/oder ein Tonsignal dargestellt wird.

4. Verfahren nach einem der vorhergehenden Ansprüche, wobei der wenigstens eine Punkt von Interesse der wenigstens einen Gewebebahn (3) ein Punkt einer Umfangslinie (14) der wenigstens einen Gewebebahn (3) ist, und der entsprechende Punkt von Interesse der Schneidebene (2) ein entsprechender Punkt einer Umfangslinie (15) der Schneidebene (2) ist.

5. Verfahren nach einem der vorhergehenden Ansprüche, wobei der wenigstens eine Punkt von Interesse der wenigstens einen Gewebebahn (3) eine Kante (16) der wenigstens einen Gewebebahn (3) ist, und der entsprechende Punkt von Interesse der Schneidebene (2) eine entsprechende Kante (17) der Schneidebene (2) ist.

6. Verfahren nach einem der vorhergehenden Ansprüche, wobei die Momentaufnahme (11) durch das Steuersystem (8) vektorisiert wird.

7. Verfahren nach einem der vorhergehenden Ansprüche, ferner umfassend:
• eine Schnittqualitätsbewertung durch das Steuersystem (8), das ferner an ein Sensorsystem an dem Stützbalken (4) und/oder an dem Schneidelement (5) und/oder an der Schneidebene (2) angeschlossen ist; und/oder
• Abnehmen des geschnittenen Gewebes von der Schneidebene (2) und Einstufen des geschnittenen Gewebes auf Basis der Schnittqualitätsbewertung.

8. Schneidsystem (1) für Gewebe, aufweisend:
• eine Schneidebene (2);
• einen Stützbalken (4), der entlang einer Längsausdehnung der Schneidebene (2) beweglich ist;
• wenigstens ein Schneidelement (5), das mit dem Stützbalken (4) gekoppelt ist und an dem Stützbalken (4) entlang einer Querausdehnung der Schneidebene (2) beweglich ist;
• eine Bildaufnahmevorrichtung (6);
**dadurch gekennzeichnet, dass** es ferner Folgendes aufweist:
• ein Steuersystem (8), das an die Bildaufnahmevorrichtung (6) angeschlossen ist, um die Ausrichtung des wenigstens einen Punkts von Interesse wenigstens einer Gewebebahn (3) mit einem entsprechenden Punkt von Interesse der Schneidebene (2) zu überprüfen.

9. Schneidsystem (1) nach Anspruch 8, wobei der wenigstens eine Punkt von Interesse der wenigstens einen Gewebebahn (3) aus Folgendem gewählt ist:
• einem Punkt einer Umfangslinie (14) der wenigstens einen Gewebebahn (3), wobei der entsprechende Punkt von Interesse der wenigstens einen Schneidebene (2) ein entsprechender Punkt einer Umrisslinie (15) der Schneidebene (2) ist; oder
• einer Kante (16) der wenigstens einen Gewebebahn (3), wobei der entsprechende Punkt von Interesse der Schneidebene (2) eine entsprechende Kante (17) der Schneidebene (2) ist.

10. Schneidsystem (1) nach Anspruch 8, ferner aufweisend eine Schablone zur Anordnung auf der wenigstens einen Gewebebahn (3), die mit dem Schneidsystem (1) geschnitten werden soll, wobei die Schablone wenigstens ein Identifikationselement (10) aufweist, wobei das Identifikationselement (10) vorzugsweise einen Strichcode und/oder einen QR-Code und/oder ein kodifiziertes Symbol und/oder ein kodifiziertes Zeichen umfasst.

11. Schneidsystem (1) nach Anspruch 8, ferner aufweisend:
• eine Spreiztransporteinrichtung, um die wenigstens eine Gewebebahn (3) auf der Schneidebene (2) anzuordnen.

12. Schneidsystem (1) nach einem der Ansprüche 8 bis 11, ferner aufweisend ein System von Aktuatoren, das an das Steuersystem (8) angeschlossen ist, um das Schneidelement (5) an der wenigstens einen Gewebebahn (3), die auf der Schneidebene (2) angeordnet wurde, zu betätigen.

13. Schneidsystem (1) nach einem der Ansprüche 8 bis 12, ferner aufweisend ein System von Sensoren, die an dem Stützbalken (4) und/oder an dem Schneidelement (5) und/oder an der Schneidebene (2) angeordnet sind.

14. Schneidsystem (1) nach einem der Ansprüche 8 bis 13, ferner aufweisend ein Element zum Abnehmen von Geweben, die durch das Schneidsystem (1) geschnitten wurden.

15. Schneidsystem (1) nach Anspruch 8, aufweisend mehrere Schneidebenen (2), zwischen denen der Stützbalken (4) und das wenigstens eine Schneidelement (5) beweglich sind, wobei jede Schneidebene (2) eine fest zugeordnete Bildaufnahmevorrichtung (6) bietet.

## Revendications

1. Procédé de vérification de coupe pour au moins une pièce de tissu (3) disposée sur un plan de coupe (2), dans un système de coupe (1) comprenant une barre de support (4) mobile le long d'une dimension longitudinale dudit plan de coupe (2), et au moins un élément de coupe (5) couplé à ladite barre de support (4) et mobile sur ladite barre de support (4) le long d'une dimension transversale dudit plan de coupe (2), comprenant les étapes suivantes :
- la détection d'un cliché (11) de ladite au moins une pièce de tissu (3) disposée sur ledit plan de coupe (2) au moyen d'un dispositif de capture d'image (6) ;
- le chargement dudit cliché (11) sur un système de commande (8) ;
- **caractérisé par** la vérification de l'alignement d'au moins un point d'intérêt de ladite au moins une pièce de tissu (3) avec un point d'intérêt correspondant dudit plan de coupe (2) au moyen dudit système de commande (8).

2. Procédé selon la revendication 1, comprenant en outre les étapes suivantes :
- le placement d'un gabarit sur ladite au moins une pièce de tissu (3), ledit gabarit comprenant au moins un élément d'identification (10) ;
- la détection de l'élément d'identification (10) dudit cliché (11) au moyen dudit dispositif de capture d'image (6) ;
- le chargement d'un modèle de référence (9) se référant audit élément d'identification (10) à partir d'une base de données préétablie dans ledit système de commande (8) ;
- la mise en correspondance dudit modèle de référence (9) avec le cliché (11).

3. Procédé selon la revendication 2, dans lequel, en cas d'alignement exact de de l'au moins un point d'intérêt de ladite au moins une pièce de tissu (3) avec le point d'intérêt correspondant dudit plan de coupe (2) et en cas de correspondance exacte entre ledit cliché (11) et ledit modèle de référence (9), une étape de coupe est activée, en cas d'alignement non exact de l'au moins un point d'intérêt de ladite au moins une pièce de tissu (3) avec le point d'intérêt correspondant dudit plan de coupe (2) et en cas de non-correspondance entre ledit modèle de référence (9) et ledit cliché (11), un signal d'erreur est généré, ledit signal d'erreur étant de préférence représenté par un signal visuel et/ou un signal lumineux et/ou un signal sonore.

4. Procédé selon l'une quelconque des revendications précédentes, dans lequel ledit au moins un point d'intérêt de ladite au moins une pièce de tissu (3) est un point d'un périmètre (14) de ladite au moins une pièce de tissu (3), et ledit point d'intérêt correspondant dudit plan de coupe (2) est un point correspondant d'un périmètre (15) dudit plan de coupe (2).

5. Procédé selon l'une quelconque des revendications précédentes, dans lequel ledit au moins un point d'intérêt de ladite au moins une pièce de tissu (3) est un bord (16) de ladite au moins une pièce de tissu (3), et ledit point d'intérêt correspondant dudit plan de coupe (2) est un bord correspondant (17) dudit plan de coupe (2).

6. Procédé selon l'une quelconque des revendications précédentes, dans lequel ledit cliché (11) est vectorisé par ledit système de contrôle (8).

7. Procédé selon l'une quelconque des revendications précédentes, comprenant en outre :
- une évaluation de la qualité de coupe au moyen dudit système de commande (8) qui est en outre connecté à un système de capteurs au niveau de ladite barre de support (4) et/ou au niveau dudit élément de coupe (5) et/ou au niveau dudit plan de coupe (2) ; et/ou
- un prélèvement de tissu coupé sur ledit plan de coupe (2) et une classification dudit tissu coupé sur la base de ladite évaluation de la qualité de coupe.

8. Système de coupe (1) pour tissus comprenant :
- un plan de coupe (2) ;
- une barre de support (4) mobile le long d'une dimension longitudinale dudit plan de coupe (2) ;
- au moins un élément de coupe (5) couplé à ladite barre de support (4) et mobile sur ladite barre de support (4) le long d'une dimension transversale dudit plan de coupe (2) ;
- un dispositif de capture d'image (6) ;
**caractérisé en ce qu'**il comprend en outre :
- un système de commande (8) relié audit dispositif de capture d'image (6) pour la vérification de l'alignement du au moins un point d'intérêt d'au moins une pièce de tissu (3) avec un point d'intérêt correspondant dudit plan de coupe (2).

9. Système de coupe (1) selon la revendication 8, dans lequel ledit au moins un point d'intérêt de ladite au moins une pièce de tissu (3) est choisi entre :
- un point d'un périmètre (14) de ladite au moins une pièce de tissu (3), et ledit point d'intérêt correspondant dudit au moins un plan de coupe (2) est un point correspondant d'un périmètre (15) dudit plan de coupe (2) ; ou
- un bord (16) de ladite au moins une pièce de tissu (3), et ledit point d'intérêt correspondant dudit plan de coupe (2) est un bord correspondant (17) dudit plan de coupe (2).

10. Système de coupe (1) selon la revendication 8, comprenant en outre un gabarit à disposer sur la au moins une pièce de tissu (3) à découper avec ledit système de coupe (1), ledit gabarit comprenant au moins un élément d'identification (10), ledit élément d'identification (10) comprenant de préférence un code à barres et/ou un code QR et/ou un symbole codifié et/ou un signe codifié.

11. Système de coupe (1) selon la revendication 8, comprenant en outre :
- un convoyeur d'étalement pour disposer la au moins une pièce de tissu (3) sur ledit plan de coupe (2).

12. Système de coupe (1) selon l'une quelconque des revendications 8 à 11, comprenant en outre un système d'actionneurs reliés audit système de commande (8), pour actionner ledit élément de coupe (5) sur la au moins une pièce de tissu (3) disposée sur ledit plan de coupe (2).

13. Système de coupe (1) selon l'une quelconque des revendications 8 à 12, comprenant en outre un système de capteurs disposés au niveau de ladite barre de support (4) et/ou au niveau dudit élément de coupe (5) et/ou au niveau dudit plan de coupe (2).

14. Système de coupe (1) selon l'une quelconque des revendications 8 à 13, comprenant en outre un élément de prélèvement de tissus découpés au moyen dudit système de coupe (1).

15. Système de coupe (1) selon la revendication 8, comprenant une pluralité de plans de coupe (2) entre lesquels ladite barre de support (4) et ledit au moins un élément de coupe (5) sont mobiles, chaque plan de coupe (2) comportant un dispositif de capture d'image dédié (6).
